# EUROPÄISCHE PATENTSCHRIFT

(11) **EP 0 609 712 B1**
(45) Veröffentlichungstag und Bekanntmachung des Hinweises auf die Patenterteilung: **05.03.1997**
(21) Anmeldenummer: 94100783.3
(22) Anmeldetag: 20.01.1994
(51) Int. Cl.: C01B 39/00

(54) **Verfahren zur Verbesserung des Fliessverhaltens von Zeolithpulvern**
Process for the improvement of flow behaviour of zeolite powders
Procédé d'amélioration du comportement à l'écoulement de poudres de zéolites

(30) Priorität: 05.02.1993 DE 4303297
(43) Veröffentlichungstag der Anmeldung: 10.08.1994
(73) Patentinhaber: DEGUSSA AG, 60311 Frankfurt (DE)
(72) Erfinder: Meier, Karl, D-53347 Alfter (DE); Lortz, Wolfgang, Dr., D-63607 Wächtersbach (DE); Leonhardt, Wolfgang, Dr., D-60314 Frankfurt (DE)

(56) Entgegenhaltungen:
- FR-A- 2 488 587
- SU-A- 1 159 885
- DATABASE WPI Week 8223, Derwent Publications Ltd., London, GB; AN 82-47274E & JP-A-57 071 816 (MIZUSAWA KAGAKU KOG) 4. Mai 1982
- DATABASE WPI Week 8224, Derwent Publications Ltd., London, GB; AN 82-48987E & JP-A-57 073 097 (MIZUSAWA KAGAKU KOG) 7. Mai 1982

## Beschreibung

Die Erfindung betrifft ein Verfahren zur Verbesserung des Fließverhaltens von Zeolithpulvern.

Zeolithpulver des Typs A werden als Builderkomponente in Waschmitteln eingesetzt. Dabei ist es wesentlich, daß das Zeolithpulver eine definierte Teilchengrößenverteilung aufweist. Aufgrund seiner feinpulvrigen Erscheinung und niedrigen Fließfähigkeit neigt das Zeolithpulver zur Brückenbildung in Silobehältern.

Es ist bekannt, die Fließfähigkeit von Zeolithpulvern zu erhöhen, indem man zu einer wäßrigen Suspension des Zeolith A Alkalialuminat hinzufügt, dabei einen pH-Wert von maximal 11 einstellt und die Suspension anschließend trocknet (US-A 4 405 484).

Das bekannte Verfahren weist den Nachteil auf, daß der Zeolith A reagglomeriert und das erhaltene Pulver anschließend vermahlen werden muß, um eine für die Anwendung in Waschmitteln gerechte Teilchengrößenverteilung aufzuweisen.

Gegenstand der Erfindung ist ein Verfahren zur Verbesserung des Fließverhaltens von Zeolithpulvern des Typs A, welches dadurch gekennzeichnet ist, daß man zu einer wäßrigen Suspension des Zeolithpulvers, insbesondere dem nach der Fällung und Filtration des Zeolithen anfallenden und mit Wasser redispergierten Filterkuchen mindestens eine oberflächenaktive Substanz zusetzt und die Suspension trocknet.

Als oberflächenaktive Substanz kann man anionische Tenside, nichtionische Tenside und/oder Polyethylenglykol einsetzen.

Als geeignete anionische Tenside sind besonders Verbindungen aus der Gruppe der Sulfate und der Sulfonate zu nennen. Zu den Sulfonaten gehören beispielsweise Alkylbenzolsulfonate, vorzugsweise mit geradkettigen Alkylresten (C9 - C13), aber auch Olefin-, Alkan- oder auch Fettsäureestersulfonate. Als Tenside vom Sulfattyp sind Fettalkoholsulfate auf nativer oder synthetischer Basis, z. B. aus Kokosfett- oder Talgfettalkoholen oder aus Oxoalkoholen, geeignet.

Als nichtionische Tenside sind besonders ethoxylierte Fettalkohole mit 2 - 7 Mol Ethylenoxid aus primären und sekundären aliphatischen und cyclischen Alkoholen geeignet. Auch die Tensidklasse der Alkylpolyglykoside, die ausschließlich auf Basis nachwachsender Rohstoffe (Fettalkohole, Stärken bzw. Zucker) zugänglich sind, eignet sich für die Anwendung. Gut geeignet sind außerdem wasserlösliche Polymerisate vom Typ Polyetheralkohol (z. B. Polyethylenglykole), insbesondere mit einer mittleren Molmasse bis 600 g/mol.

Die oberflächenaktive Substanz kann man in Mengen von 0,05 bis 2,0 %, vorzugsweise 0,1 bis 1,0 % zusetzen.

Die wäßrige Suspension des Zeolithpulvers, insbesondere den in Wasser redispergierten Filterkuchen, kann man mittels Sprühtrocknung oder mittels einer Spinflash-Trocknungsanlage trocknen.

Das erfindungsgemäße Verfahren weist den Vorteil auf, daß das erhaltene Produkt ein verbessertes Fließverhalten und damit auch eine höhere Stampfdichte aufweist. Ein Aufmahlen des getrockneten Zeolithpulvers ist nicht notwendig.

### Beispiele

Ein in Wasser redispergierter Filterkuchen eines Zeolithpulvers des Typs A wird mit verschiedenen Mengen des Niotensids C₁₂/C₁₃-Oxoalkohol mit 4,5/6,0 Mol Ethylenoxid versetzt. Nach 5 Minuten Einarbeitungszeit wird die Suspension bei Ti = 500 °C und Ta = 110 °C sprühgetrocknet. Die verbesserte Fließfähigkeit des Pulvers zeigt sich am Schüttkegel:

| | | | | | |
|---|---|---|---|---|---|
| Kohlenstoff | (%) | - | 0,125 | 0,250 | 1,00 |
| x 1,56 = Tensidgehalt | (%) | - | 0,195 | 0,391 | 1,563 |
| Schüttkegelhöhe | (mm) | 68 | 60 | 50 | 45 |
| bzw. Böschungswinkel | (°) | 69,8 | 67,4 | 63,4 | 60,9 |
| Stampfdichte | (g/l) | 490 | 520 | 570 | 560 |

Das Fließverhalten wird anhand der Schüttkegelmethode bestimmt, die in der Schriftenreihe Pigmente, Nr. 31, 4. Auflage 11/1981, von Degussa AG publiziert wurde.

Der Einfluß auf die Schüttkegelhöhe bzw. den Böschungswinkel ist deutlich und damit ein Zeichen für das verbesserte Fließverhalten. Je niedriger die Schüttkegelhöhe bzw. je kleiner der Böschungswinkel, desto fließfähiger ist das Zeolithpulver. Bei der Stampfdichte ist eine Steigerung um ca. 15 % zu erzielen, wodurch eine bessere Raumnutzung bei dem Transport sowie bei der Lagerung in Silos erreicht werden kann.

Eine deutliche Verbesserung gegenüber einem Zeolithpulver, das nicht mit einem Tensid versehen wurde, ergibt sich in Bezug auf das Benetzungsverhalten bzw. auf das Dispergierverhalten. Der Zeolith wird schneller benetzt und ist damit schneller in wäßrigen Medien, wie z. B. einem Waschmittelslurry, dispergierbar. Über die damit verbundene Verkürzung der Ansatzzeiten erreicht man eine höhere Flexibilität und, je nach Gegebenheit, eine höhere Kapazität.

## Patentansprüche

1. Verfahren zur Verbesserung des Fließverhaltens von Zeolithpulvern des Typs A, dadurch gekennzeichnet, daß man einer wäßrigen Suspension des Zeolithpulvers, insbesondere dem nach der Fällung und Filtration des Zeolithen anfallenden und mit Wasser redispergierten Filterkuchen mindestens eine oberflächenaktive Substanz zusetzt und die Suspension trocknet.

2. Verfahren nach Anspruch 1, dadurch gekennzeichnet, daß man als oberflächenaktive Substanz anionische Tenside, nichtionische Tenside und/oder Polyethylenglykol einsetzt.

3. Verfahren nach den Ansprüchen 1 und 2, dadurch gekennzeichnet, daß man die oberflächenaktive Substanz in Mengen von 0,05 bis 2,0 %, vorzugsweise 0,1 bis 1,0 % zusetzt.

4. Verfahren nach den Ansprüchen 1 bis 4, dadurch gekennzeichnet, daß man die wäßrige Suspension des Zeolithpulvers, insbesondere den redispergierten Filterkuchen mittels Sprühtrocknung trocknet.

5. Verfahren nach dem Ansprüchen 1 bis 4, dadurch gekennzeichnet, daß man die wäßrige Suspension des Zeolithpulvers, insbesondere den redispergierten Filterkuchen mittels einer Spinflash-Trocknungsanlage trocknet.

## Claims

1. A process for improving the flow properties of Type A zeolite powders, characterised in that at least one surface-active substance is added to an aqueous suspension of the zeolite powder, in particular to the filter cake formed following the precipitation and filtration of the zeolite and redispersed in water, and the suspension is dried.

2. A process according to claim 1, characterised in that anionic surfactants, nonionic surfactants and/or polyethylene glycol may be used as surface-active substances.

3. A process according to claims 1 and 2, characterised in that the surface-active substance is added in quantities of from 0.05 to 2.0%, preferably from 0.1 to 1.0%.

4. A process according to claims 1 to 4, characterised in that the aqueous zeolite powder suspension, in particular the redispersed filter cake, is dried by means of spray drying.

5. A process according to claims 1 to 4, characterised in that the aqueous zeolite powder suspension, in particular the redispersed filter cake, is dried by means of a spinflash-drying plant.

## Revendications

1. Procédé d'amélioration du comportement à l'écoulement de poudres de zéolithes du type A,
caractérisé en ce qu'
on ajoute à une suspension aqueuse de la poudre de zéolithe au moins une substance tensio-active, notamment au gâteau de filtre obtenu après précipitation et filtration de la zéolithe et redispersé dans l'eau et on sèche la suspension.

2. Procédé selon la revendication 1,
caractérisé en ce qu'
on utilise comme substance tensio-active des tensio-actifs anioniques, des tensio-actifs non ioniques et/ou du polyéthylène glycol.

3. Procédé selon les revendications 1 et 2,
caractérisé en ce qu'
on ajoute la substance de tensio-active en des quantités de 0,05 à 2,0 %, de préférence 0,1 à 1,0 %.

4. Procédé selon les revendications 1 à 4,
caractérisé en ce qu'
on sèche par atomisation la suspension aqueuse de poudre de zéolithe, notamment le gâteau de filtre redispersé.

5. Procédé selon les revendications 1 à 4,
caractérisé en ce qu'
on sèche la suspension aqueuse de poudre de zéolithe, notamment le gâteau de filtre redispersé au moyen d'une unité d'atomisation spin-flash.
